# EUROPEAN PATENT SPECIFICATION

(11) **EP 0 462 199 B1**
(45) Date of publication and mention of the grant of the patent: **26.07.1995**
(21) Application number: 90904972.8
(22) Date of filing: 09.03.1990
(51) Int. Cl.: F24F 6/12, F24F 12/00

(54) **AIR CONDITIONING UNIT**
KLIMAANLAGE
UNITE DE CLIMATISATION

(30) Priority: 10.03.1989 SE 8900848
(43) Date of publication of application: 27.12.1991
(73) Proprietor: Recup Svenska AB, 102 35 Stockholm (SE)
(72) Inventor: Persson, Sixten, S-113 23 Stockholm (SE)
(74) Representative: Nyberg, Bengt
(86) International application number: SE9000150
(87) International publication number: WO9010828

(56) References cited:
- WO-A-84/03756
- WO-A-87/01436
- GB-A- 0 601 023
- GB-A- 2 160 963
- SE-A- 8 402 392
- US-A- 4 142 575
- US-A- 4 380 910
- US-A- 4 429 735

## Description

This invention relates to an air conditioning unit and, more particularly, to an air conditioning unit comprising a duct for conveying supply air through the unit, a duct for conveying exhaust air through the unit, a heat exchanger, particularly a recuperative heat exchanger, in which the supply air duct and the exhaust air duct are linked which the another in heat-exchanging relationship and which comprises an exhaust air passage system including an exhaust air inlet at the top of the heat exchanger and an exhaust air outlet at the bottom of the heat exchanger, and a watering device including means for supplying water to the exhaust air passage system at the exhaust air inlet and means for collecting water draining off from the exhaust air outlet. More particularly, the invention relates to an air conditioning unit of the kind defined in the pre-characterising portion of claim 1.

Air conditioning units of this kind are illustrated and described in GB-A-2 160 963.

As a result of the supply of water to the exhaust air passage system of the heat exchanger, the supply air is cooled. In the above-mentioned document features are illustrated and described which aim at improving the cooling of the supply air.

The invention, as defined in claim 1, mitigates these problems and at the same time opens a possibility to design the air conditioning unit in a way that results in further advantages, as is explained below.

By way of example, an embodiment of the air conditioning unit according to the invention is described in greater detail hereinafter with reference to the accompanying diagrammatic drawing, in which:
Fig. 1 is a vertical sectional view of the unit; and
Fig. 2 is a horizontal sectional view of the unit taken on line II-II of Fig. 1.

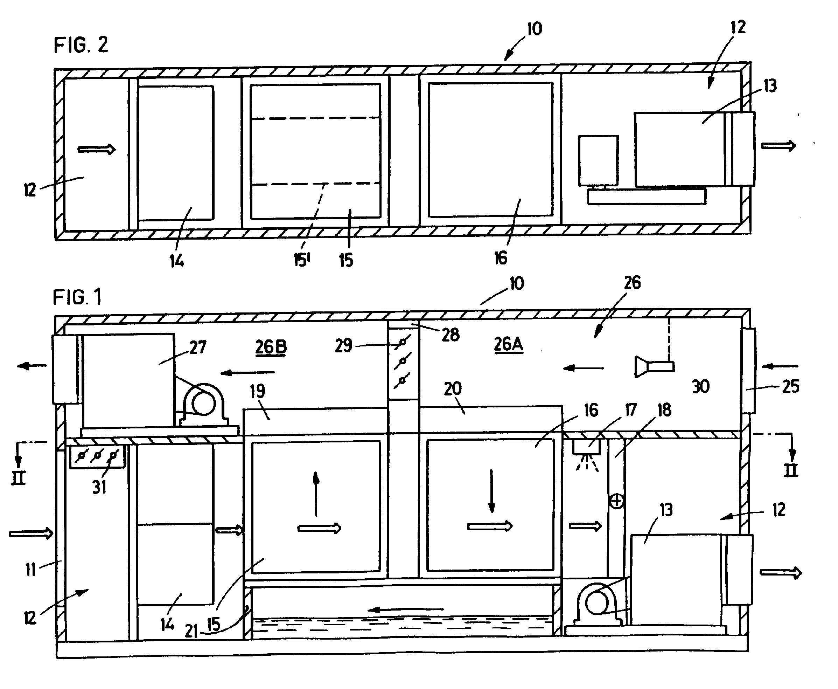

The air conditioning unit diagrammatically shown in Figs. 1 and 2 is intended for general ventilation of dwellings or office or industrial spaces and may be installed e.g. on the roof of the building containing the dwellings or spaces or in a suitable room within the building.

Outside air to be processed in the unit 10 so as to be suitable for use as supply air enters the unit through an intake 11 at one end of the unit and is transported substantially horizontally through a supply air duct, which is generally designated by 12, and leaves the unit through the outlet of a supply air fan 13 at the other end of the unit.

While flowing through the unit 10 to the supply air fan 13 the air passes through a supply air damper (not shown) which is associated with the intake 11 but may also be independent thereof, a supply air filter 14, a secondary heat exchanger 15, a primary heat exchanger 16, a supply air humidifier 17 and a heater 18. The secondary heat exchanger 15, the supply air humidifier 17 and the heater 18, and possibly also the supply air filter 14, are components which may be omitted.

Both the primary heat exchanger 16 and the secondary heat exchanger 15 are plate heat exchangers, the detailed design of which does not form part of the invention. For that reason, they are not shown in detail and they are not described in greater detail than is required for an understanding of the present invention.

Each heat exchanger 15, 16 comprises a system of juxtaposed supply air flow passages, which are defined by vertical flat plates parallel to the longitudinal direction of the supply air duct and which are open towards the ends of the duct, and a system of exhaust air flow passages, which alternate with the supply air passages and are open upwardly and downwardly, whereby the flows of supply air and the exhaust air pass through the heat exchanger in cross-current and heat-exchanging relationship with one another.

At the inlet of the primary heat exchanger 16 and the outlet of the secondary heat exchanger 15, that is, at the top of the heat exchangers, each heat exchanger is associated with a device 19 and 20, respectively, for supplying water to the exhaust air passage systems of the heat exchangers. The detailed construction and operation of the devices do not form part of the invention. The water supplied to the exhaust air passage systems serves to cool the supply air when such cooling is required and to keep the surfaces of the exhaust air passages clean. It may also be used for improving the resistance of the heat exchangers to fire.

The water is supplied such that the entire, or practically the entire surface area of the plate faces which define the exhaust air flow passages is swept in the downward direction by a film of flowing water. This film of water is cooled in the exhaust air flow passages, because the water evaporates partially and in turn recuperatively cools the supply air flowing in the supply air flow passages.

Beneath the heat exchanger 15, 16 there is a sump 21 which is common to both heat exchangers and serves both to collect water flowing out of the exhaust air flow passages of the heat exchangers and to convey the exhaust air leaving the exhaust air outlet of the primary heat exchanger 16 to the exhaust air inlet of the secondary heat exchanger 15.

Exhaust air passing through the air conditioning unit 10 enters the unit through an intake 25 positioned above the supply air fan 13 at one end of the unit and is then transported through an exhaust air duct generally designated by 26 to the outlet of an exhaust air fan 27 positioned above the supply air intake 11 at the other end of the unit. The exhaust air duct 26 comprises two substantially horizontal, aligned duct sections 26A, 26B between the adjacent ends of which there is a wall or barrier 28 including a bypass damper 29 by means of which a smaller or greater portion of the exhaust air may be passed direct from the first horizontal duct section 26A to the second horizontal duct section 26B.

Normally, a substantial portion of the exhaust air is passed from the first horizontal duct section 26A through the primary heat exchanger 16, the sump 21 and the secondary heat exchanger 15 to the second horizontal duct section 26B. Accordingly, the exhaust air duct 26 comprises, in addition to the two horizontal duct sections 26A, 26B, a pair of vertical sections, which are aligned with the supply air duct 12 and comprise the exhaust air passage systems of the heat exchangers, and a further horizontal section, which includes the sump 21 and interconnects the vertical duct sections at their lower ends.

Several important advantages result from the above-described arrangement.

One advantage is that there is little risk of water being carried over to the second horizontal section 26B of the exhaust air duct 26, because entrainment of water in the vertical duct section adapted to accommodate or formed by the secondary heat exchanger 15 has to take place against the influence of gravity on the droplets while they are in that section. This advantage is achieved both when this section is formed by a secondary heat exchanger and when it only forms a passage between the sump 21 and the second horizontal exhaust air duct section 26B.

In addition, in case the just-mentioned vertical section of the exhaust air duct is formed by a secondary heat exchanger 15 as is shown in the drawings, a significant improvement of the temperature efficiency of the heat-exchanging system is achieved without significant increase of the dimensions of the unit, compared with the case where there is no secondary heat exchanger. An increase of the temperature efficiency is often desirable, even though in some situations it may mean some danger of icing.

Alternatively, the total height of the unit may be reduced without consequent reduction of the temperature efficiency by a reduction of the height of the primary and secondary heat exchangers and a corresponding reduction of the height of the supply air duct 12.

If the secondary heat exchanger 15 is omitted, the vertical section of the exhaust air duct which connects the sump 21 with the second horizontal section 26B may be formed by a duct element positioned centrally in the supply air duct as is indicated in broken lines at 15′ in Fig. 2.

The sump 21, which is coextensive in the longitudinal direction of the supply air duct 12 with the heat exchangers 15 and 16 and an intervening space as shown in Fig. 1, not only serves to collect water draining off from the heat exchangers 15 and 16, but also forms a water reservoir for the water supply devices 19 and 20. Within the sump a substantially constant level of water is maintained.

The first horizontal section 26A of the exhaust air duct 26 accommodates a burner 30, preferably a gas burner, which is used, when required, to increase the temperature of the exhaust air before it reaches the primary heat exchanger 16. In this way, the supply air can be heated to the desired temperature before it leaves the primary heat exchanger. Known equipment may be used for turning the burner 30 on and off and for controlling the fuel supply to the burner.

At the downstream end of the second horizontal exhaust air duct section 26B a recirculating air damper 31 is provided by means of which a smaller or larger portion of the exhaust air may be passed from this section of the exhaust air duct to the supply air duct upstream of the supply air filter 14 and the heat exchangers 15, 16. In the interest of simplicity, the means which are provided to this end in the exhaust air fan 27 are omitted.

## Claims

1. Air conditioning unit, comprising
- a duct (12) for conveying supply air through the unit;
- a duct (26) for conveying exhaust air through the unit;
- a heat exchanger (16) in which the supply air duct and the exhaust air duct are linked with one another in heat-exchanging relationship and which comprises an exhaust air passage system including an exhaust air inlet at the top of the heat exchanger and an exhaust air outlet at the bottom of the heat exchanger, a substantially vertical section (15,15′) of the exhaust air duct (26) following immediately after the exhaust air outlet; and
- a watering device (20) including means for supplying water to the exhaust air passage system at the exhaust air inlet and means (21) for collecting water draining off from the exhaust air outlet, the water collecting means (21) being adapted also to collect water flowing out of the said vertical section of the exhaust air duct (26),
in which air conditioning unit
a substantially horizontal section (26A) of the exhaust air duct (26) located upstream of the heat exchanger (16) and a substantially horizontal further section (26B) of the exhaust air duct located downstream of said vertical section (15) of the exhaust air duct are disposed substantially in alignment with the bottom walls of said horizontal exhaust air duct sections (26A,26B) disposed approximately level with the exhaust air inlet of the heat exchanger (16) and with the upper end of said vertical exhaust air duct section (15,15′),
**characterised in that**
the heat exchanger is a plate heat exchanger, and a barrier (28) is disposed between the adjacent ends of the horizontal exhaust air duct sections (26A,26B) and provided with a damper (29) for controlled bypassing of exhaust air past the heat exchanger (15).

2. Air conditioning unit according to claim 1, **characterised** by a secondary heat exchanger (15) which is disposed in said vertical exhaust air duct section and in which the supply air duct and said vertical exhaust air duct section are linked with one another in heat-exchanging relationship, the secondary heat exchanger (15) being a plate heat exchanger comprising an exhaust air passage system including an exhaust air inlet at the bottom thereof and an exhaust air outlet at the top thereof.

3. Air conditioning unit according to claim 2, **characterised** by means (19) associated with the secondary heat exchanger (15) for supplying water to the exhaust air passage system thereof at the exhaust air outlet.

4. Air conditioning unit according to any one of claims 1-3, **characterised** in that a fan (27) for transporting exhaust air through the exhaust air passage (26) is disposed at the downstream end of said further exhaust air duct section (26B).

5. Air conditioning unit according to any one of claims 1 to 4, **characterised** in that the water collecting means (21) includes a sump disposed beneath both the exhaust air outlet of the first heat exchanger (16) and said vertical exhaust air duct section (15,15′).

## Patentansprüche

1. Klimatisierungseinheit, umfassend
- eine Leitung (12) für das Führen von Zuluft durch die Einheit;
- eine Leitung (26) für das Führen von Abluft durch die Einheit;
- einen Wärmetauscher (16), in dem die Zuluftleitung und die Abluftleitung miteinander in Wärmeaustauschbeziehung verknüpft sind, und der ein Abluftpassagesystem umfaßt einschließlich eines Ablufteinlasses an der Oberseite des Wärmetauschers und einem Abluftauslaß am Boden des Wärmetauschers, wobei ein im wesentlichen vertikaler Abschnitt (15, 15′) der Abluftleitung (26) unmittlbar nach dem Abluftauslaß folgt; und
- eine Befeuchtungseinrichtung (20) einschließlich Mitteln für die Zufuhr von Wasser zu dem Abluftpassagesystem am Ablufteinlaß und Mittel (21) für das Sammeln von Wasser, das von dem Abluftauslaß abtropft, wobei das Wassersammelmittel (21) auch ausgebildet ist zum Sammeln von Wasser, das aus dem vertikalen Abschnitt der Abluftleitung (26) abströmt,
in welcher Klimatisierungseinheit
ein im wesentlichen horizontaler Abschnitt (26A) der Abluftleitung (26) oberhalb des Wärmetauschers (16) angeordnet ist und ein im wesentlichen horizontaler weiterer Abschnitt (26B) der Abluftleitung stromabwärts des vertikalen Abschnitts (15) der Abluftleitung im wesentlichen in Ausfluchtung mit den Bodenwandungen der horizontalen Abluftleitungsabschnitte (26A, 26B), etwa auf dem Niveau des Ablufteinlasses des Wärmetauschers (16) und des oberen Endes des vertikalen Abluftleitungsabschnitts (15, 15′) angeordnet ist,
dadurch gekennzeichnet, daß
der Wärmetauscher ein Plattenwärmetauscher ist und daß eine Barriere (28) zwischen den benachbarten Enden der horizontalen Abluftleitungsabschnitte (26A, 26B) angeordnet ist und mit einem Dämpfer (29) für das gesteuerte Führen von Abluft an dem Wärmetauscher (15) vorbei versehen ist.

2. Klimatisierungseinheit nach Anspruch 1, gekennzeichnet durch einen sekundären Wärmetauscher (15), der in dem vertikalen Abluftleitungsabschnitt angeordnet ist und in dem die Zuluftleitung und der vertikale Abluftleitungsabschnitt miteinander in Wärmeaustauschbeziehung verknüpft sind, welcher sekundäre Wärmetauscher (15) ein Plattenwärmetauscher ist, umfassend ein Abluftpassagesystem einschließlich eines Ablufteinlasses am Boden desselben und eines Abluftauslasses an der Oberseite desselben.

3. Klimatisierungseinheit nach Anspruch 2, gekennzeichnet durch Mittel (19), die dem zweiten Wärmetauscher (15) zugeordnet sind für die Einspeisung von Wasser in das Abluftpassagesystem desselben an dem Abluftauslaß.

4. Klimatisierungseinheit nach einem der Ansprüche 1 bis 3, dadurch gekennzeichnet, daß ein Gebläse (27) für das Fördern von Abluft durch die Abluftpassage (26) am abstromliegenden Ende des weiteren Abluftleitungsabschnitts (26B) angeordnet ist.

5. Klimatisierungseinheit nach einem der Ansprüche 1 bis 4, dadurch gekennzeichnet, daß das Wassersammelmittel (21) einen Sumpf umfaßt, der unter sowohl dem Abluftauslaß des ersten Wärmetauschers (16) als auch dem vertikalen Abluftleitungsabschnitt (15, 15′) angeordnet ist.

## Revendications

1. Unité de climatisation, comprenant :
- un conduit (12) pour acheminer l'air d'alimentation dans l'unité;
- un conduit (26) pour acheminer l'air d'échappement dans l'unité;
- un échangeur de chaleur (16) dans lequel le conduit d'air d'alimentation et le conduit d'air d'échappement sont couplés en une relation d'échange de chaleur et qui comprend un système de passage d'air d'échappement comprenant une entrée d'air d'échappement au sommet de l'échangeur de chaleur et une sortie d'air d'échappement à la base de l'échangeur de chaleur, une section sensiblement verticale (15, 15′) du conduit d'air d'échappement (26) suivant immédiatement la sortie d'air d'échappement; et
- un dispositif d'alimentation en eau (20) comprenant un moyen pour alimenter en eau le système de passage d'air d'échappement à l'entrée d'air d'échappement et un moyen (21) pour récupérer l'eau s'écoulant de la sortie d'air d'échappement, le moyen de récupération d'eau (21) étant adapté à récupérer également l'eau s'écoulant de ladite section verticale du conduit d'air d'échappement (26),
dans laquelle unité de conditionnement d'air
une section sensiblement horizontale (26A) du conduit d'air d'échappement (26) située en amont de l'échangeur de chaleur (16) et une section supplémentaire sensiblement horizontale (26B) du conduit d'air d'échappement située en aval de ladite section verticale (15) du conduit d'air d'échappement sont disposées sensiblement en alignement avec les parois inférieures desdites sections de conduit d'air d'échappement horizontales (26A, 26B) étant approximativement de niveau avec l'entrée d'air d'échappement de I'échangeur de chaleur (16) et avec l'extrémité supérieure de ladite section de conduit d'air d'échappement verticale (15, 15′),
caractérisée en ce que
l'échangeur de chaleur est un échangeur de chaleur à plaques, et une barrière (28) est disposée entre les extrémités adjacentes des sections de conduit d'air d'échappement horizontales (26A, 26B) et est dotée d'un registre (29) pour une dérivation contrôlée de l'air d'échappement au-delà de l'échangeur de chaleur (15).

2. Unité de climatisation selon la revendication 1, caractérisée par un échangeur de chaleur secondaire (15) qui est disposé dans ladite section de conduit d'air d'échappement verticale et dans lequel le conduit d'air d'alimentation et ladite section de conduit d'air d'échappement verticale sont couplés en une relation d'échange de chaleur, I'échangeur de chaleur secondaire (15) étant un échangeur de chaleur à plaques comprenant un système de passage d'air d'échappement comprenant une entrée d'air d'échappement à sa base et une sortie d'air d'échappement à son sommet.

3. Unité de climatisation selon la revendication 2, caractérisée par un moyen (19) associé à l'échangeur de chaleur secondaire (15) pour alimenter en eau son système de passage d'air d'échappement à la sortie d'air d'échappement.

4. Unité de climatisation selon l'une quelconque des revendications 1 à 3, caractérisée en ce qu'un ventilateur (27) pour le transport d'air d'échappement dans le conduit d'air d'échappement (26) est disposé à l'extrémité d'aval de ladite section supplémentaire de conduit d'air d'échappement (26B).

5. Unité de climatisation selon l'une quelconque des revendications 1 à 4, caractérisée en ce que le moyen de récupération d'eau (21) comprend un récipient collecteur disposé à la fois sous la sortie d'air d'échappement de l'échangeur de chaleur primaire (16) et sous ladite section de conduit d'air d'échappement verticale (15, 15′).
